# EUROPEAN PATENT SPECIFICATION

(11) **EP 3 100 841 B1**
(45) Date of publication and mention of the grant of the patent: **02.05.2018**
(21) Application number: 16170829.2
(22) Date of filing: 23.05.2016
(51) Int. Cl.: B29C 45/77, B29C 45/76

(54) **INJECTION MOLDING MACHINE**
SPRITZGIESSMASCHINE
MACHINE DE MOULAGE À INJECTION

(30) Priority: 01.06.2015 JP 2015111694
(43) Date of publication of application: 07.12.2016
(73) Proprietor: SUMITOMO HEAVY INDUSTRIES, LTD., Tokyo 141-6025 (JP)
(72) Inventor: SEIKE, Kouji, Kanagawa, 237-8555 (JP); ISHIDA, Hironobu, Kanagawa, 237-8555 (JP)
(74) Representative: Louis Pöhlau Lohrentz

(56) References cited:
- EP-A1- 2 583 811
- DE-B3-102005 016 618
- JP-A- S6 391 220
- US-A- 3 784 657
- US-A1- 2009 278 274

## Description

### BACKGROUND OF THE INVENTION

### Field of the Invention

A certain embodiment of the present invention relates to an injection molding machine.

### Description of Related Art

Inject ion molding machines have an injection unit that fills a cavity space of a mold unit with a molding material. The injection unit has a cylinder that heats the molding material, and a screw that is rotatably disposed within the cylinder. The screw has a rotating shaft, and a spiral flight that protrudes from an outer periphery of the rotating shaft. A spiral groove is formed by the flight, and the molding material is supplied to an upstream part of the groove. The injection unit feeds the molding material from an upstream side to a downstream side along the groove by rotating the rotating shaft. The molding material is gradually melted by the heat from the cylinder while being fed to the downstream side (for example, refer to Japanese Unexamined Patent Application Publication No. 2000-185342).

DE 10 2005 016 618 B3 relates to a procedure for controlling the homogeneity of the temperature distribution inside a molding material.

EP 2 583 811 A1 discloses a procedure in which parameters such as temperature or pressure are measured at various locations along an injection unit.

US 2009/278274 A1 discloses a method for monitoring and/or controlling the melt filling of at least one cavity.

US 3 784 657 discloses a time monitored process for controlling injection molding cycle.

In the related art, a molten state of the molding material is unknown.

### SUMMARY OF THE INVENTION

The invention has been made in view of the above problems, and a main object thereof is to provide an injection molding machine in which a molten state of a molding material can be ascertained.

In order to solve the above problems, according to an aspect of the invention, there is provided an injection molding machine including an injection unit including a cylinder that heats a molding material, and an injection member that is disposed within the cylinder so as to be movable forward and backward; and a monitoring unit that monitors the injection pressure of the molding material injected from the cylinder by forward movement of the injection member. The monitoring unit determines a molten state of the molding material on the basis of fluctuations of the injection pressure at the time of the forward movement of the injection member.

According to the aspect of the invention, an injection molding machine in which a molten state of a molding material can be ascertained is provided.

### BRIEF DESCRIPTION OF THE DRAWINGS

FIG. 1 is a view illustrating an injection molding machine according to an embodiment.
FIG. 2 is a view illustrating fluctuations of an injection pressure during injection from a cylinder by forward movement of a screw in a purge operation according to the embodiment.

### DETAILED DESCRIPTION OF THE INVENTION

An embodiment for carrying out the invention will be described below with reference to the drawings, the same or corresponding components being designated by the same or corresponding reference signs, and the description thereof being omitted.

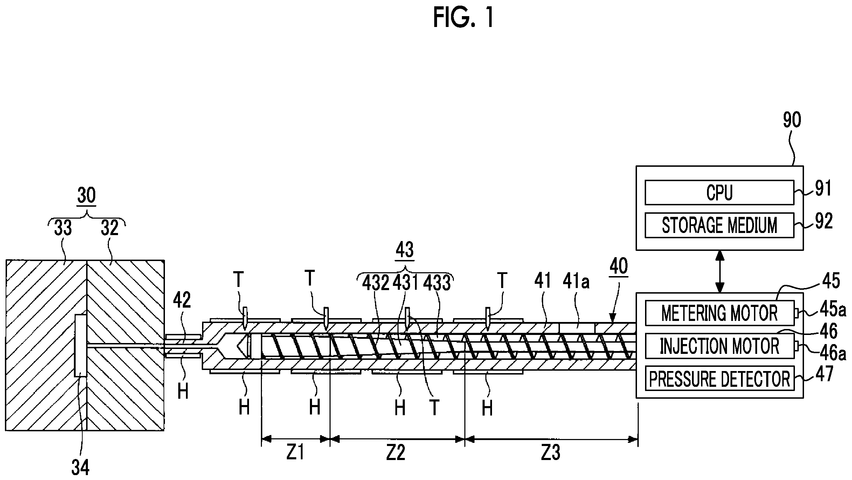

FIG. 1 is a view illustrating an injection molding machine according to an embodiment. An injection molding machine has an injection unit 40 and a controller 90.

The injection unit 40 is made to be movable forward and backward with respect to a mold unit 30. The injection unit 40 is touched on the mold unit 30, and fills a cavity space 34 of the mold unit 30 with a molding material. The mold unit 30 is constituted of a stationary mold 32 and a movable mold 33. By moving the movable mold 33 forward and backward with respect to the stationary mold 32, mold closing, mold clamping, and mold opening of the mold unit 30 are performed. The cavity space 34 is formed between the stationary mold 32 and the movable mold 33 in a mold clamped state. A molding product is obtained by the molding material filled within the cavity space 34 being hardened. Thereafter, mold opening of the mold unit 30 is performed and the molding product is pushed out from the mold unit 30.

The injection unit 40 has, for example, a cylinder 41, a nozzle 42, a screw 43, a plasticizing motor 45, an injection motor 46, and a pressure detector 47. Hereinafter, a description will be made with a movement direction (leftward direction in FIG. 1) of the screw 43 during filling being as the front, and a movement direction (rightward direction of FIG. 1) of the screw 43 during plasticizing being as the rear.

The cylinder 41 heats the molding material supplied from a supply port 41a. The supply port 41a is formed at a rear part of the cylinder 41.

A heating source H, such as a heater, is provided at an outer periphery of the cylinder 41. A plurality of the heating sources H are provided in an axial direction of the cylinder 41. The controller 90 independently controls the plurality of heating sources H so that a temperature distribution in the axial direction of the cylinder 41 becomes a set temperature distribution.

The temperature of the cylinder 41 is measured by a thermometer T, such as a thermocouple. A plurality of the thermometers T are provided in the axial direction of the cylinder 41, and output each measurement temperature to the controller 90. The controller 90 controls the heating sources H so that the deviations between the measurement temperature and a set temperature become zero.

The nozzle 42 is provided at a front end of the cylinder 41, and is pressed against the mold unit 30.

The screw 43 is disposed within the cylinder 41 so as to be rotatable and movable forward and backward. The screw 43 has a rotating shaft 431, and a spiral flight 432 that protrudes from an outer periphery of the rotating shaft 431. A spiral groove 433 is formed by the flight 432, and the molding material is fed from an upstream side (a right side in the drawing) to a downstream side (a left side in the drawing) along the groove 433. The screw 43 corresponds to an injection member set forth in the claims.

In addition, the screw 43 may further has a subflight that partitions the groove 433 formed by the flight 432.

The screw 43 has a first section Z1, a second section Z2, and a third section Z3 in this order from the upstream side toward the downstream side. The first section Z1 is a section where the solid phase of the molding material is present. The second section Z2 is a section where both of a solid phase and a liquid phase of the molding material are present. The third section Z3 is a section where the liquid phase of the molding material is present.

The groove 433 is deep in the first section Z1, is shallow in the third section Z3, and is shallower from the upstream side to the downstream side in the second section Z2. In this case, the first section Z1 is also referred to as a feeding zone, the second section Z2 is also referred to as a compression zone, and the third section Z3 are also referred to as a metering zone.

In addition, the depth of the groove 433 may be constant.

The plasticizing motor 45 rotates the screw 43, thereby feeding the molding material forward along a spiral groove of the screw 43. The molding material is gradually melted by the heat from the cylinder 41 while being fed forward. When the liquid molding material is fed to the front of the screw 43 and accumulated at the front part of the cylinder 41, the screw 43 is moved backward.

The injection motor 46 moves the screw 43 forward and backward. The injection motor 46 moves the screw 43 forward, thereby filling the cavity space 34 of the mold unit 30 with the liquid molding material accumulated in front of the screw 43. Thereafter, the injection motor 46 pushes the screw 43 forward, and applies a pressure to the molding material within the cavity space 34. An insufficient molding material can be replenished. A motion conversion mechanism that converts the rotational motion of the injection motor 46 into a linear motion of the screw 43 is provided between the injection motor 46 and the screw 43.

The pressure detector 47 is disposed, for example, between the injection motor 46 and the screw 43, and detects a pressure that the screw 43 receives from the molding material, a back pressure to the screw 43, and the like. The pressure that the screw 43 receives from the molding material is equivalent to a pressure acting on the molding material from the screw 43.

The controller 90 has a central processing unit (CPU) 91, and a storage medium 92, such as a memory. The controller 90 makes the CPU 91 execute a program stored in the storage medium 92, thereby controlling the injection unit 40 and the like. The controller 90 corresponds to a monitoring unit set forth in the claims. In addition, the monitoring unit may be provided separately from the controller 90.

The controller 90 performs a molding operation of performing a series of steps, such as a filling step, a holding pressure step, and a cooling step, thereby manufacturing a molding product. The controller 90 performs a cycle operation of repeating the series of steps, thereby repeatedly manufacturing a molding product. A plasticizing step may be performed during the cooling step for shortening of a molding cycle.

In the filling step, the injection motor 46 is driven to move the screw 43 forward at a setting speed, and the inside of the mold unit 30 is filled with the liquid molding material accumulated in front of the screw 43. The position and the speed of the screw 43 are detected by, for example, an encoder 46a of the injection motor 46. If the position of the screw 43 reaches a predetermined position, switching (so-called V/P switching) from the filling step to the holding pressure step is performed.

In addition, after the position of the screw 43 reaches the predetermined position in a filling step, the screw 43 may be stopped at the predetermined position, and then, the V/P switching may be performed. Immediately before the V/P switching, the slow-speed forward movement or the slow-speed backward movement of the screw 43 may be performed instead of the stop of the screw 43.

In the holding pressure step, the injection motor 46 is driven to push the screw 43 forward with a setting pressure, and a pressure is applied to the molding material within the moldunit 30. An insufficient molding material can be replenished. The pressure of the molding material is detected by, for example, the pressure detector 47. A cooling step is started after the holding pressure step. In the cooling step, hardening of the molding material within the cavity space 34 is performed. The plasticizing step may be performed during the cooling step.

In the plasticizing step, the plasticizing motor 45 is driven to rotate the screw 43 at a set number of rotations, and feeds the molding material forward along the spiral groove of the screw 43. The molding material is gradually melted with this feeding. When the liquid molding material is fed to the front of the screw 43 and accumulated at the front part of the cylinder 41, the screw 43 is moved backward. The number of rotations of the screw 43 is detected by, for example, an encoder 45a of the plasticizing motor 45.

In the plasticizing step, the injection motor 46 is driven to apply a set back pressure to the screw 43 in order to limit a sudden backward movement of the screw 43. The set back pressure to the screw 43 is detected by, for example, the pressure detector 47. The plasticizing step is completed if the screw 43 moves backward to a predetermined position and a predetermined amount of the molding material is accumulated in front of the screw 43.

In addition, although the injection unit 40 of the present embodiment is of an in-line screw type, the injection unit may be of a preplasticization type or the like. The preplasticization type injection unit supplies a molding material melted within a plasticizing cylinder to an injection cylinder, and injects the molding material into the mold unit from the injection cylinder. The screw is disposed inside the plasticizing cylinder so as to be rotatable or rotatable and movable forward and backward, and a plunger is disposed within the injection cylinder so as to be movable forward and backward. In this case, the injection cylinder corresponds to a cylinder set forth in the claims, and the plunger corresponds to an injection member set forth in the claims.

Meanwhile, a purge operation is performed at the time of warming-up, at the time of replacement of the molding material, and the like. The purge operation is performed in a state where the injection unit 40 is separated from the mold unit 30, and includes an operation corresponding to the plasticizing step and an operation corresponding to the filling step. In the operation corresponding to the plasticizing step, the molding material is accumulated in front of the screw 43 by rotating the screw 43 at a set number of rotations. The screw 43 is moved backward along with this. In this case, an opening and closing mechanism (not illustrated) may block the nozzle 42. Meanwhile, in the operation corresponding to the filling step, the liquid molding material accumulated in front of the screw 43 is injected from the cylinder 41 by moving the screw 43 forward at a setting speed. In this case, the opening and closing mechanism opens the nozzle 42.

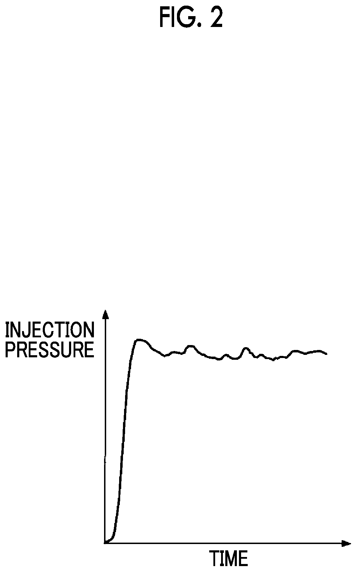

FIG. 2 is a view illustrating fluctuations of an injection pressure during injection from a cylinder by forward movement of a screw in a purge operation according to the embodiment. The fluctuations of the injection pressure are illustrated in an exaggerated manner in FIG. 2. As illustrated in FIG. 2, once the injection pressure rises, this injection pressure is substantially stabilized.

Since roughness and fineness are in the molding material if unmelted grains are included in the molding material injected from the cylinder 41, the injection pressure fluctuates momentarily. Meanwhile, if the molding material injected from the cylinder 41 is sufficiently melted and is uniform, momentary fluctuations of the injection pressure hardly occur.

Hence, the controller 90 monitors the injection pressure at the time of the forward movement of the screw 43, and determines a molten state of the molding material on the basis of the fluctuations of the injection pressure. The injection pressure is measurable by, for example, a pressure detector 47. Since the fluctuations of the injection pressure show the roughness and fineness of the molding material, determination of the molten state of the molding material becomes possible.

The measurement of the injection pressure may be performed from the start of the forward movement of the screw 43 to the end of the forward movement. Although all measurement data may be used for the determination, only a portion of the measurement data may be used for the determination. The injection pressure used for the determination may be the data after a predetermined time. For example, the injection pressure used for the determination may be the data after a predetermined time passes from the start of the forward movement of the screw 43, the data after the screw 43 reaches a predetermined position, the data after the injection pressure rises first and is then substantially stabilized, or the like. in these cases, since the roughness and fineness of the molding material appear markedly in the fluctuations of the injection pressure, determination precision can be improved.

Criteria for determination include, for example, criteria for determination of the following (1) to (2). These criteria for determination may be independently used, or may be used in combination.

A criterion for determination of (1) is whether or not the rate of increase in the injection pressure falls within a predetermined range. In a case where the rate of increase in the injection pressure does not fall within the predetermined range, the momentary fluctuations of the injection pressure are large and the roughness and fineness of the molding material appear markedly. Therefore, there is a concern that a portion of the molding material may be injected as unmelted from the injection unit 40. Hence, in a case where the rate of increase in the injection pressure does not fall within the predetermined range, it is determined that the molten state of the molding material is bad. On the other hand, in a case where the rate of increase in the injection pressure falls within the predetermined range, the momentary fluctuations of the injection pressure is small, and it is determined that the molten state of the molding material is good.

A criterion for determination of (2) is whether or not the range of fluctuations of the injection pressure from a reference value is equal to or lower than a threshold value. In a case where the range of fluctuations exceeds the threshold value, the momentary fluctuations of the injection pressure are large, and the roughness and fineness of the molding material appear markedly. Therefore, there is a concern that a portion of the molding material may be injected as unmelted from the injection unit 40. Hence, in a case where the range of fluctuations exceeds the threshold value, it is determined that the molten state of the molding material is bad. On the other hand, in a case where the range of fluctuations is equal to or lower than the threshold value, the momentary fluctuations of the injection pressure is small and it is determined that the molten state of the molding material is good. Here, the reference value may be, for example, an average value of all the data used for the determination, or a moving average deviation of the latest data of all the data used for the determination. The moving average may be any of a simple moving average, a load moving average, and an index moving average.

In this case, the controller 90 may determine the molten state of the molding material on the basis of the fluctuations of the injection pressure at the time of the forward movement of the screw 43 in the purge operation. By performing the determination at the time of the purge operation, settings of molding conditions are possible before the start of the molding operation.

In addition, the controller 90 may determine the molten state of the molding material on the basis of the fluctuations of the injection pressure at the time of the forward movement of the screw 43 in the molding operation. The yield of a molding product can be improved by performing the determination at the time of the molding operation.

The controller 90 may acquire the fluctuations of the injection pressure at the time of the forward movement of the screw 43 in the purge operation as data used for drawing-up of the criteria for determination of the molten state of the molding material. The controller 90 matches the acquired fluctuations with the molten state of the molding material, and stores the matching results in the storage medium 92. The molten state of the molding material can be determined by visual inspection, inspection of quality, and the like after solidification of the molding material. The results may be stored in the controller 90 via an operating unit or the like that receives an input operation performed by a user. The controller 90 may change the molding conditions, such as the set number of rotations of the screw 43, and the set temperature of the cylinder 41, thereby acquire a lot of data. The controller 90 obtains, for example, a predetermined range of the criterion for determination of the above (1), the threshold value of the criterion for determination of the above (2), and the like on the basis of these kinds of memory. Hence, the criteria for determination can be drawn up during the purge operation, and the criteria for determination can be drawn up before the molding operation. Using the drawn-up criteria for determination, the controller 90 may determine the molten state of the molding material in another purge operation, or may determine the molten state of the molding material in the molding operation. In addition, although the controller 90 takes above data by performing the purge operation, the above data may be taken by performing the molding operation in a tentative way.

The controller 90 may output an alarm on the basis of results of determination of the molten state of the molding material. An alarm is output in a case where the molten state of the molding material is bad, and an alarm is not output in a case where the molten state of the molding material is good. The output of an alarm may be performed by the display of an image, the output of sound, and the like.

The controller 90 may change the settings of the molding conditions on the basis of the results of determination of the molten state of the moldingmaterial. For example, the controller 90 may change at least one of the set number of rotations of the screw 43 and the set temperature of the cylinder 41 on the basis of the results of determination of the molten state of the molding material.

In a case where the molten state of the molding material is bad, the set number of rotations of the screw 43 may be changed in its decreasing direction. Since a speed at which the molding material is fed forward becomes low and the heating time of the molding material becomes long, the molten state of the molding material is improved. Additionally, in a case where the molten state of the molding material is bad, the set temperature of the cylinder 41 may be changed in its increasing direction. Even in this case, the molten state of the molding material is naturally improved.

Meanwhile, in a case where the molten state of the molding material is good, the settings of the molding conditions do not need to be changed, but may be changed. In a case where the molten state of the molding material is good, the set number of rotations of the screw 43 may be changed in its increasing direction within a favorable range. The molding cycle can be shortened. Additionally, in a case where the molten state of the molding material is good, the set temperature of the cylinder 41 may be changed in its decreasing direction within a favorable range. The load on the heating sources H can be reduced.

The set number of rotations of the screw 43 may be set to be as large as possible in a range where the molten state of the molding material is good. The set number of rotations of the screw 43 is determined taking the time of the cooling step, and the like into consideration.

Additionally, the set temperature of the cylinder 41 may be set to be as small as possible in a range where the molten state of the molding material is good. The set temperature of the cylinder 41 is determined taking the set number of rotations of the screw 43, and the like, into consideration.

Although the embodiment of the injection unit has been described above, the invention is not limited to the above-described embodiment, and various alterations and improvements can be made within the concept of the invention described in the claims.

For example, although the controller 90 of the above embodiment determines the molten state of the molding material in two steps of good and bad, the molten state may be determined in multiple steps of three or more steps. In this case, the criteria for determination may also be drawn up in multiple steps . Additionally, in this case, the controller 90 may change the settings of molding conditions with a change width according to steps.

## Claims

1. An injection molding machine comprising:
an injection unit (40) including a cylinder (41) that heats a molding material, and an injection member (43) that is disposed within the cylinder (41) so as to be movable forward and backward; and
a monitoring unit (90) that monitors the injection pressure of the molding material injected from the cylinder (41) by forward movement of the injection member (43),
**characterized in that** the monitoring unit (90) determines a molten state of the molding material on the basis of fluctuations of the injection pressure at the time of the forward movement of the injection member (43).

2. The injection molding machine according to Claim 1,
wherein the monitoring unit (90) determines the molten state of the molding material on the basis of the rate of increase in the injection pressure at the time of the forward movement of the injection member (43).

3. The injection molding machine according to Claim 1 or 2,
wherein the monitoring unit (90) determines the molten state of the molding material on the basis of a range of fluctuations from a reference value of the injection pressure at the time of the forward movement of the injection member (43) .

4. The injection molding machine according to any one of Claims 1 to 3,
wherein the monitoring unit (90) determines the molten state of the molding material on the basis of the fluctuations of the injection pressure at the time of the forward movement of the injection member (43) in a purge operation.

5. The injection molding machine according to any one of Claims 1 to 4,
wherein the monitoring unit (90) determines the molten state of the molding material on the basis of the fluctuations of the injection pressure at the time of the forward movement of the injection member (43) in a molding operation.

6. The injection molding machine according to any one of Claims 1 to 5,
wherein the monitoring unit (90) acquires the fluctuations of the injection pressure at the time of the forward movement of the injection member (43) in a purge operation as data used for drawing-up of criteria for determination of the molten state.

7. The injection molding machine according to any one of Claims 1 to 6,
wherein the monitoring unit (90) outputs an alarm on the basis of results of determinations of the molten state.

8. The injection molding machine according to any one of Claims 1 to 7,
wherein the monitoring unit (90) changes settings of molding conditions on the basis of results of determination of the molten state.

## Patentansprüche

1. Spritzgießmaschine, umfassend:
eine Einspritzeinheit (40) mit einem Zylinder (41), der einen Gießwerkstoff erhitzt, und einem Einspritzbauteil (43), das in dem Zylinder (41) so angeordnet ist, dass es nach vorn und hinten beweglich ist, und
eine Überwachungseinheit (90), die den Einspritzdruck des aus dem Zylinder (41) durch Vorwärtsbewegung des Einspritzbauteils (43) eingespritzten Gießwerkstoffs überwacht,
**dadurch gekennzeichnet, dass** die Überwachungseinheit (90) einen geschmolzenen Zustand des Gießwerkstoffs auf Basis von Schwankungen des Einspritzdrucks zum Zeitpunkt der Vorwärtsbewegung des Einspritzbauteils (43) bestimmt.

2. Spritzgießmaschine nach Anspruch 1,
wobei die Überwachungseinheit (90) den geschmolzenen Zustand des Gießwerkstoffs auf Basis der Anstiegsgeschwindigkeit des Einspritzdrucks zum Zeitpunkt der Vorwärtsbewegung des Einspritzbauteils (43) bestimmt.

3. Spritzgießmaschine nach Anspruch 1 oder 2,
wobei die Überwachungseinheit (90) den geschmolzenen Zustand des Gießwerkstoffs auf Basis eines Bereichs von Schwankungen von einem Referenzwert für den Einspritzdruck zum Zeitpunkt der Vorwärtsbewegung des Einspritzbauteils (43) bestimmt.

4. Spritzgießmaschine nach einem der Ansprüche 1 bis 3,
wobei die Überwachungseinheit (90) den geschmolzenen Zustand des Gießwerkstoffs auf Basis der Schwankungen des Einspritzdrucks zum Zeitpunkt der Vorwärtsbewegung des Einspritzbauteils (43) bei einem Spülvorgang bestimmt.

5. Spritzgießmaschine nach einem der Ansprüche 1 bis 4,
wobei die Überwachungseinheit (90) den geschmolzenen Zustand des Gießwerkstoffs auf Basis der Schwankungen des Einspritzdrucks zum Zeitpunkt der Vorwärtsbewegung des Einspritzbauteils (43) bei einem Spritzgießvorgang bestimmt.

6. Spritzgießmaschine nach einem der Ansprüche 1 bis 5,
wobei die Überwachungseinheit (90) die Schwankungen des Einspritzdrucks zum Zeitpunkt der Vorwärtsbewegung des Einspritzbauteils (43) bei einem Spülvorgang als Daten zum Erstellen von Kriterien zum Bestimmen des geschmolzenen Zustands aufnimmt.

7. Spritzgießmaschine nach einem der Ansprüche 1 bis 6,
wobei die Überwachungseinheit (90) auf Basis von Ergebnissen der Bestimmung des geschmolzenen Zustands einen Alarm ausgibt.

8. Spritzgießmaschine nach einem der Ansprüche 1 bis 7,
wobei die Überwachungseinheit (90) auf Basis von Ergebnissen der Bestimmung des geschmolzenen Zustands Einstellungen für Spritzgießbedingungen ändert.

## Revendications

1. Machine de moulage par injection comprenant :
une unité d'injection (40) incluant un cylindre (41) qui réchauffe un matériau de moulage, et un élément d'injection (43) qui est disposé à l'intérieur du cylindre (41) de manière à être mobile vers l'avant et vers l'arrière ; et
une unité de surveillance (90) qui surveille la pression d'injection du matériau de moulage injecté à partir du cylindre (41) par un déplacement vers l'avant de l'élément d'injection (43) ;
**caractérisée en ce que** l'unité de surveillance (90) détermine un état de fusion du matériau de moulage sur la base de fluctuations de la pression d'injection au moment du déplacement vers l'avant de l'élément d'injection (43).

2. Machine de moulage par injection selon la revendication 1,
dans laquelle l'unité de surveillance (90) détermine l'état de fusion du matériau de moulage sur la base du taux d'augmentation de la pression d'injection au moment du déplacement vers l'avant de l'élément d'injection (43).

3. Machine de moulage par injection selon la revendication 1 ou 2,
dans laquelle l'unité de surveillance (90) détermine l'état de fusion du matériau de moulage sur la base d'une plage de fluctuations par rapport à une valeur de référence de la pression d'injection au moment du déplacement vers l'avant de l'élément d'injection (43).

4. Machine de moulage par injection selon l'une quelconque des revendications 1 à 3,
dans laquelle l'unité de surveillance (90) détermine l'état de fusion du matériau de moulage sur la base des fluctuations de la pression d'injection au moment du déplacement vers l'avant de l'élément d'injection (43) dans le cadre d'une opération de purge.

5. Machine de moulage par injection selon l'une quelconque des revendications 1 à 4,
dans laquelle l'unité de surveillance (90) détermine l'état de fusion du matériau de moulage sur la base des fluctuations de la pression d'injection au moment du déplacement vers l'avant de l'élément d'injection (43) dans le cadre d'une opération de moulage.

6. Machine de moulage par injection selon l'une quelconque des revendications 1 à 5,
dans laquelle l'unité de surveillance (90) acquiert les fluctuations de la pression d'injection au moment du déplacement vers l'avant de l'élément d'injection (43) dans le cadre d'une opération de purge, sous la forme de données utilisées pour l'établissement de critères de détermination de l'état de fusion.

7. Machine de moulage par injection selon l'une quelconque des revendications 1 à 6,
dans laquelle l'unité de surveillance (90) émet une alarme sur la base de résultats de détermination de l'état de fusion.

8. Machine de moulage par injection selon l'une quelconque des revendications 1 à 7,
dans laquelle l'unité de surveillance (90) modifie des réglages de conditions de moulage sur la base de résultats de détermination de l'état de fusion.
